# EUROPEAN PATENT SPECIFICATION

(11) **EP 3 657 314 B1**
(45) Date of publication and mention of the grant of the patent: **26.11.2025**
(21) Application number: 18836030.9
(22) Date of filing: 05.07.2018
(51) Int. Cl.: G06F 3/04842, G06F 9/54, G06F 40/166, G06F 9/451

(54) **TERMINAL AND VIEW CHARACTER COPYING METHOD THEREOF, AND STORAGE APPARATUS**
ENDGERÄT UND SICHTZEICHENKOPIERVERFAHREN DAFÜR SOWIE SPEICHERVORRICHTUNG
TERMINAL ET SON PROCÉDÉ DE COPIE DE CARACTÈRES SUR VUE ET APPAREIL DE STOCKAGE

(30) Priority: 17.07.2017 CN 201710582256
(43) Date of publication of application: 27.05.2020
(73) Proprietor: Huizhou TCL Mobile Communication Co., Ltd., Huizhou, Guangdong 516006 (CN)
(72) Inventor: SUN, Jipeng, Huizhou Guangdong 516006 (CN)
(74) Representative: Murgitroyd & Company
(86) International application number: PCT/CN2018/094648
(87) International publication number: WO 2019/015482

(56) References cited:
- EP-A2- 2 998 878
- CN-A- 105 955 828
- CN-A- 106 020 815
- CN-A- 107 608 598
- US-A1- 2012 304 094
- US-A1- 2017 160 905
- US-B2- 9 003 283
- US-B2- 9 098 127

## Description

### TECHNICAL FIELD

The present disclosure relates to the field of internet technology (IT), and in particularly to a terminal, a view character copying method of the terminal, and a storage apparatus.

### BACKGROUND

To improve visual sensory experience of users, most of application programs in the market may achieve animation effects via the Animation function. The animation effects may include movement, expanding, contraction, and gradient of controls and a combination of various animations. The nature of making animations to the controls is making animation effects to a view. When operations are executed to the view, users may usually copy the view. However, as a view, it may contain characters that cannot be copied and pasted at will. For example, texts in the view may not be able to be copied, or all the texts in the view must be copied and pasted as a whole, followed by selecting unwanted texts to delete, which definitely impacts user experience.

US2012304094A1 discloses a method of a mobile terminal for editing using multiple copy or crop operation includes displaying a menu window, and when a user's input for copy or crop via the menu window exists, a highlighting pen icon is displayed to allow the user to select an object to copy or crop via the highlighting pen icon, wherein the selected object(s) is stored for a subsequent paste operation.

US2013232408A1 discloses a method for text editing is provided. The method includes steps: displaying a text file on a touch display screen; displaying a clipboard alongside of the displayed text file; determining selected text in response to a text selection touch operation; generating parameters representative of the selected text in response to the text selection touch operation; copying the parameters to the clipboard and displaying the parameters on the displayed clipboard in response to a use's first loading operation; finding the text in the text file according to the selected parameters displayed on the displayed clipboard in response to a user's parameter selection operation; and copying the found text from the text file to an intended location in response to a user's second loading operation. A related text editing system is also provided.

US2017160905A1 discloses an indication to activate a first floating point area is received. An indication to select a first floating point area on a touch screen of a device is received. The first floating point is associated with a first section of content on the touch screen of the device. An indication to activate a second floating point area is received. An indication to select a second floating point area on a touch screen of a device is received. The second floating point is associated with a second section of content on the touch screen of the device.

US2014109019A1 discloses a method includes displaying a plurality of display elements on a touch-sensitive display of an electronic device; displaying a selection tool on the touch-sensitive display; in response to detecting a first gesture, selecting a first portion of the plurality of display elements, the first portion comprising at least one display element; and in response to detecting a second gesture, moving the selection tool without selecting the display elements; and in response to detecting a third gesture, selecting a second portion of the plurality of the plurality of display elements, the second portion being non-contiguous with the first portion. EP2998878A2 discloses a method of controlling a mobile terminal, and which includes displaying, via a display unit of the mobile terminal, a screen including text; receiving, via a controller of the mobile terminal, a first command copying at least a portion of the text displayed on the screen; receiving, via the controller, a second command for dividing the portion of the text into a plurality of blocks; storing, via a memory associated with the mobile terminal, at least first and second blocks included in the divided blocks based on at least one of a position of the received second command and a direction of the received second command; and displaying the at least first and second blocks on the display unit

### SUMMARY OF THE DISCLOSURE

Given the above, the present disclosure may provide a terminal, a view character copying method of the terminal, and a storage apparatus, so that the characters in the view may be copied and pasted at will to improve user experience. The present disclosure is set out in the appended set of claims.

The present disclosure sets an attribute of the view to be editable by invoking a bottom layer interface, so that a start position and an end position of characters in the view may be set at will. In such a way, users may select characters in the view at will, so that the characters may be copied and pasted freely, and user experience may be improved.

### BRIEF DESCRIPTION OF THE DRAWINGS

FIG. 1 is a flow chart illustrating a view character copying method provided by an embodiment of the present disclosure.
FIG. 2 is a flow chart illustrating a method of copying a plurality of sections of the view characters based on the method shown in FIG. 1.
FIG. 3 is a structural diagram of a terminal that can copy view characters provided by an embodiment of the present disclosure.

### DETAILED DESCRIPTION

Technical solutions of each exemplary embodiments of the present disclosure are to be described clearly and comprehensively, accompanying with appended figures. Without confliction, each of the following embodiments and features of the embodiments may be combined.

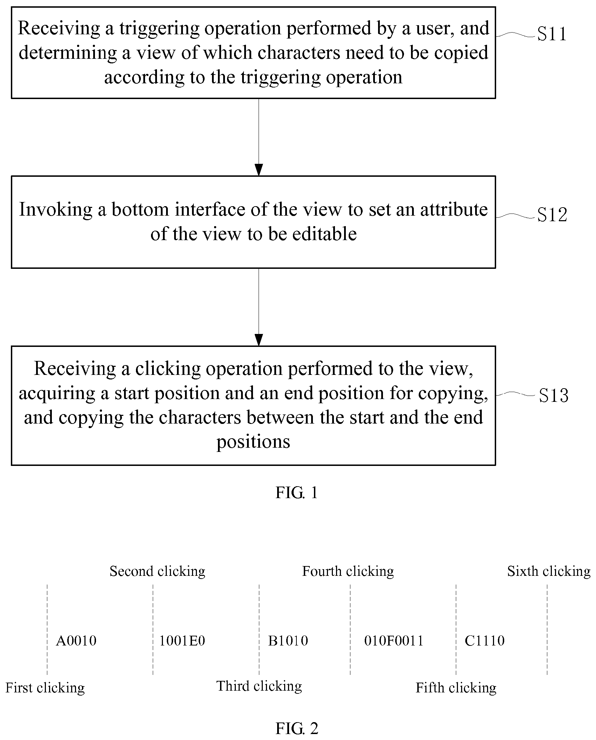

FIG. 1 is a flow chart illustrating a view character copying method provided by an embodiment. Referring to FIG. 1, the copying method provided herein may include operations of S11∼S13.

S11: a triggering operation of a user is received, and a view of which character copying need to be executed is determined accordingly.

The triggering operation of the user is treated as an indication of entering a mode of copying. In an actual application scenario, the triggering operations corresponds to long pressing the view. The long pressing is interpreted as the user pressing a region of where the view is located by a finger or selecting the region by a physical button for a preset period of time. As an example of long pressing a touch screen, after an operation platform receiving the long pressing operation performed to the view by the user, the displayed view corresponding to the region of which long pressed by the user may be acquired by reverse mapping, so that the view of which character copying need to be executed may be determined.

In order to distinguish the view of which character copying need to be executed from other views, the present disclosure may set flag variables of the view determined by the triggering operation. The operation platform may only need to recognize flag variables to quickly determine the view of which character copying needs to be executed, so that subsequent operations may be executed easily.

S12: a bottom layer interface of the view is invoked to set the attribute of the view to be editable.

An operation platform installed with Android as an example, in the present embodiment, a function of setTextIsSelectable of the bottom interface is invoked. For example, the function of setTextIsSelectable is set to be true, so that the attribute of the view is set to be editable. In the present embodiment, the term "editable" corresponds to the transformation of the view into a data string or a piece of code, so that users are able to select or edit the data string or the piece of code.

In the present embodiment, after setting the attribute of the view to be editable, some other settings may be performed to the view, so that users may easily select characters that they want to copy. For example, a function of setTextAppearance may be invoked to set a style of the view. To be specific, through the operation platform, users may change character fonts and increase the size and spacing of the characters and the like. These operations of setting may be interpreted as "an operation of setting a copying mode" to the view, which may change the eventual displayed animation effect of the view.

S13: the clicking operation to the view is received, the start and the end position of copying are acquired, and characters between the start and the end positions are copied.

After the view entering the copying mode, the first clicking operation of the user is treated as an operation determining a start position, and the second clicking operation of the user is treated as an operation determining an end position. After the second clicking operation, in the present embodiment, a dialog is popped up, a floating dialog button with texts such as "to be copied or not" is popped up to ask the user whether the selection of the characters are finalized, and an immediate copying is performed. When receiving a feedback from the user suggesting the selection of the characters is finalized and an immediate copying is to be performed, the characters between the start and the end positions are copied. When the operation platform does not receive a feedback from the user suggesting the selection of the characters is finalized and an immediate copying is to be performed, a time count down is performed after the second clicking, when counting down for a preset period of time, the instant recorded start and end positions is deleted, and the present copying operation is terminated.

Of course, in the present embodiment, the dialog may be popped up after the first clicking to ask the user whether the instant clicking is valid. When the operation platform receives an affirmative message from the user, the instant clicking operation may be determined as valid, and a start position may be recorded. When the affirmative message is not received, and the preset period of time has been reached after the first clicking, the instant clicking operation may be treated as invalid, and an instant recorded start position may be deleted.

In the present embodiment, a plurality of sections of the view characters may be copied and pasted. Referring to FIG. 2, users may perform clicking operations to the view characters for more than two times as 1~n, wherein the n>2 and may be an even number. Odd numbers of times of clicking and even numbers of times of clicking may be flagged as start positions and end positions, respectively. Based on the sequence of the clicking operations, characters between an odd number of times of clicking and an even number adjacent to the odd number of times of clicking may be determined as the characters to be copied. To be specific, a character string A0010 between the first clicking operation and the second clicking operation, a character string B1010 between the third clicking operation and the fourth clicking operation, and a character string C1110 between the fifth clicking operation and the sixth clicking operation may be the characters to be copied. It should be understood that, the characters may not be limited to digits and English letters, characters and the like may also be included.

The operation of copying and pasting a plurality of sections may also be performed by the means of popping up a dialog. In addition, in the present embodiment, after each odd number and even number of times of clicking, character information copied each time by the user may be recorded through a string and placed in a sequential order. Line feeds and splicing may be performed to the character information.

In the present embodiment, after the copying is completed, the string may be saved in a clipboard, at the same time, all the operations during "an operation of setting a copying mode" may be restored, the flag variables of the view may also be restored, and the attribute of the view may be set to be non-editable.

It can be seen from the above that the bottom layer interface is invoked to set the attribute of the view to be editable, so that the start and the end positions of the characters in the view may be set at will. In such a way, the users may select characters in the view at will, so that copying and pasting may be performed freely, and user experience may be improved.

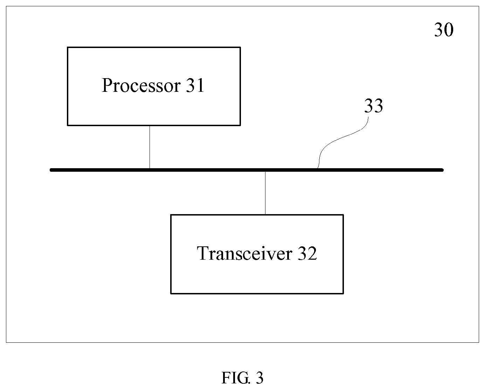

FIG. 3 is a structural diagram of a terminal that can copy view characters provided by an embodiment of the present disclosure. Referring to FIG. 3, a terminal 30 include a processor 31, a transceiver 32 and a communication bus 33, wherein the processor 31 connects with the transceiver 32 via the communication bus 33.

The transceiver 32 is used to receive triggering operations of a user.

The processor 31 is used to determine the view of which character copying need to be executed according to the triggering operations and invoke the bottom interface of the view to set the attribute of the view to be editable.

The processor 31 invokes the function of setTextIsSelectable to set the attribute of the view to be editable. After setting the attribute of the view to be editable, the processor 31 sets other attributes of the view to allow the users to select characters that they want to copy. For example, the function of setTextAppearance is invoked to set a style of the view, including but not limiting to changing character fonts, character sizes, character spacing and the like.

The transceiver 32 may also be used to receive clicking operations performed to the view.

The processor 31 is further used to acquire the start and the end positions for copying according to the clicking operations, and copy the characters between the start and the end positions.

The processor 31 is used to copy and paste a plurality of characters in the view. To be specific, the processor 31 flags an odd number of times of clicking and an even number of times of clicking as a start position and an end position, respectively. Based on a sequential order of the clicking operations, characters between each odd number of times of clicking and an even number adjacent to the odd number of times of clicking are determined as the characters that need to be copied. Also, after each odd number and even number of times of clicking, the processor 31 may record each of the character information through a string, place the character information in a sequential order, and subsequently may perform line feeds or splicing to the character information.

The structural elements of the terminal 30 in the present embodiment may implement the method of copying the view characters as described in the above-mentioned embodiment correspondingly, and the same technical effects may be achieved. The terminal 30 may be a smart mobile phone, a personal digital assistant (PDA), a tablet computer and the like, and may also be a wearable apparatus or an apparatus that has a function of editing and operating the view and is inset in clothes, jewelries, and accessories.

Further, the above-mentioned embodiments may be combined, and when the above-mentioned functions are realized in a form of software and can be sold or used as an independent product, a readable storage medium of an electronic device may be used for storage. Therefore, the present disclosure may provide a storage apparatus having program data stored, wherein the program data may be executed to perform the method as described in the above embodiments. The storage apparatus may be a universal serial bus flash disk, a CD-ROM disk, a server or the like. In other words, each of the embodiments of the present disclosure may be realized in a form of a software product, which may include a plurality of instructions to allow a smart terminal to execute a part or all of the operations in the methods described in the above-mentioned embodiments.

## Claims

1. A method of copying view characters, wherein the method comprises:
receiving a triggering operation of a user from an operation platform and
distinguishing a view of which character copying needs to be executed from other views according to the triggering operation corresponding to a region of which long pressed by the user (S11);
invoking a bottom layer interface of the view and setting an attribute of the view to be editable (S12); and
receiving a clicking operation performed to the view and acquiring a start position and an end position, and copying the characters between the start and the end positions (S13), pasting and
saving the characters on a clipboard;
wherein the step of invoking a bottom layer interface of the view and setting an attribute of the view to be editable (S12), comprises:
invoking a function of setTextlsSelectable of a bottom layer interface of the view and setting the function to be true and an attribute of the view is changed from being non-editable to being editable;
**characterized in that** the attribute of the view being editable corresponds to a transformation of the view into a data string or a piece of code, after setting the attribute of the view to be editable, a function of setTextAppearance is invoked to set a style of the view, odd numbers of times of clicking and even numbers of times of clicking are flagged as start positions and end positions, respectively, based on a sequence of clicking operations, characters between an odd number of times of clicking and an even number adjacent to the odd number of times of clicking are determined as characters to be copied.

2. The method according to claim 1, wherein the copying the characters between the start and the end positions (S13) comprises:
after each even number of times of clicking, popping up a dialog to ask the user whether the selection of the characters is finalized, and an immediate copy is to be performed; and
when receiving a feedback from the user confirming the selection of the characters is finalized and
an immediate copy is to be performed, the characters between the start and the end positions are copied.

3. The method according to claim 1, wherein the triggering operation of the user comprises finger pressing or pressing a physical button to select a region of where the view is located for a preset period of time, or selecting the region by double clicking or mono clicking.

4. The method according to claim 1, wherein the receiving the triggering operation of the user and distinguishing the view of which character copying needs to be executed from other views according to the triggering operation (S11) comprises:
setting a flag variable of the triggering operation determined view, and distinguishing the view of which the character copying needs to be executed from other views by recognizing the flag variable.

5. A terminal (30) used to copy view characters, wherein the terminal comprises a processor (31) and a transceiver (32) connected to the processor (31), wherein
the transceiver (32) is arranged to receive a triggering operation of a user from an operation platform;
the processor (31) is arranged to distinguish the view of which character copying needs to be executed from other views according to the triggering operation corresponding to a region of which long pressed by the user and invoke a bottom layer interface of the view to set an attribute of the view to be editable;
the transceiver (32) is further arranged to receive a clicking operation that performed to the view to paste and save the characters on a clipboard; and
the processor (31) is further arranged to acquire a start position and an end position according the clicking operation and copy the characters between the start and the end positions;
wherein the processor (31) is configured to invoke a function of setTextlsSelectable of a bottom layer interface of the view and set the function to be true and an attribute of the view is changed from being non-editable to being editable;
**characterized in that** the attribute of the view being editable corresponds to a transformation of the view into a data string or a piece of code, after setting the attribute of the view to be editable, a function of setTextAppearance is invoked to set a style of the view, odd numbers of times of clicking and even numbers of times of clicking are flagged as start positions and end positions, respectively, based on a sequence of clicking operations, characters between an odd number of times of clicking and an even number adjacent to the odd number of times of clicking are determined as characters to be copied.

6. The terminal according to claim 5, wherein the triggering operation of the user comprises finger pressing or pressing a physical button to select a region of which the view is located for a preset period of time, or selecting the region by double clicking or mono clicking.

7. The terminal according to claim 5, wherein the processor (31) is further arranged to set a flag variable of the triggering operation determined view and distinguish the view of which the character copying needs to be executed from other views by recognizing the flag variable.

## Patentansprüche

1. Verfahren zum Kopieren von Ansichtszeichen, wobei das Verfahren Folgendes umfasst:
Empfangen einer Auslöseoperation eines Benutzers von einer Operationsplattform und Unterscheiden einer Ansicht, deren Zeichenkopie ausgeführt werden soll, von anderen Ansichten, basierend auf der Auslöseoperation, die einem vom Benutzer langgedrückten Bereich entspricht (S11);
Aufrufen einer Bodenschichtschnittstelle der Ansicht und Einstellen eines Attributs der Ansicht als bearbeitbar (S12); und
Empfangen einer zur Ansicht durchgeführten Klickoperation und Erfassen einer Startposition und einer Endposition, und Kopieren der Zeichen zwischen der Start- und Endposition (S13), Einfügen und Speichern von Zeichen auf einem Clipboard;
wobei der Schritt des Aufrufens einer Bodenschichtschnittstelle der Ansicht und Einstellens eines Attributs der Ansicht als bearbeitbar (S12) umfasst:
Aufrufen einer Funktion von setTextlsSelectable einer Bodenschichtschnittstelle der Ansicht und Einstellen der Funktion auf true, wodurch ein Attribut der Ansicht von nicht bearbeitbar zu bearbeitbar geändert wird;
**dadurch gekennzeichnet, dass** das Attribut der Ansicht als editierbar einer Transformation der Ansicht in eine Datenkette oder ein Stück Code entspricht, nachdem das Attribut der Ansicht auf editierbar eingestellt wurde, eine Funktion von setTextAppearance aufgerufen wird, um einen Stil für die Ansicht festzulegen, eine ungerade Anzahl von Malen von Klicks und eine gerade Anzahl von Malen von Klicken jeweils als Start- und Endpositionen markiert sind, basierend auf einer Sequenz von Klickoperationen, die Zeichen zwischen einer ungeraden Anzahl von Malen von Klicks und einer der ungeraden Anzahl von Malen von Klicks benachbarten geraden Anzahl als zu kopierende Zeichen bestimmt sind.

2. Verfahren nach Anspruch 1, wobei das Kopieren der Zeichen zwischen den Start- und Endpositionen (S13) umfasst:
nach jeder geraden Anzahl von Malen von Klicks ein Dialog erscheint, der den Benutzer fragt, ob die Auswahl der Zeichen abgeschlossen ist, und eine sofortige Kopie durchgeführt werden soll; und
wenn Bestätigung der Auswahl von Zeichen nach Empfangen einer Rückmeldung vom Benutzer abgeschlossen ist und eine sofortige Kopie durchgeführt werden soll, die Zeichen zwischen den Start- und Endpositionen kopiert werden.

3. Verfahren nach Anspruch 1, wobei die Auslöseoperation des Benutzers Fingerdrücken oder Drücken einer physischen Taste umfasst, um einen Bereich auszuwählen, in dem sich die Ansicht für eine voreingestellte Zeitdauer befindet, oder Auswahl des Bereichs durch Doppelklicken oder Einzelklicken.

4. Verfahren nach Anspruch 1, wobei das Empfangen der Auslöseoperation des Benutzers und Unterscheiden der Ansicht, deren Zeichenkopie ausgeführt werden soll, von anderen Ansichten, basierend auf der Auslöseoperation (S11) umfasst:
Festlegen einer Flaggenvariable der Auslöseoperation Bestimmungsansicht, und Unterscheiden der Ansicht, deren Zeichenkopie ausgeführt werden soll, von anderen Ansichten durch Erkennen der Flaggenvariable.

5. Endgerät (30) zum Kopieren von Ansichtszeichen, wobei das Endgerät einen Prozessor (31) und einen Transceiver (32) umfasst, der mit dem Prozessor (31) verbunden ist, wobei der Transceiver (32) zum Empfangen einer Auslöseoperation eines Benutzers von einer Operationsplattform vorgesehen ist;
wobei der Prozessor (31) so vorgesehen ist, dass er die Ansicht, deren Zeichenkopie durchgeführt werden muss, von anderen Ansichten unterscheidet, basierend auf der Auslöseoperation, die dem Bereich entspricht, der vom Benutzer lang gedrückt wurde, und eine Bodenschichtschnittstelle der Ansicht aufruft, um ein Attribut der Ansicht auf editierbar zu setzen;
wobei der Transceiver (32) ferner so vorgesehen ist, dass er eine Klickoperation empfängt, die auf die Ansicht ausgeführt wird, um die Zeichen auf einem Clipboard einzufügen und zu speichern; und
der Prozessor (31) weiterin so vorgesehen ist, dass er eine Startposition und eine Endposition gemäß der Klickoperation ermittelt und die Zeichen zwischen den Start- und Endpositionen kopiert;
wobei der Prozessor (31) dazu vorgesehen ist, eine Funktion von setTextlsSelectable einer Bodenschichtschnittstelle der Ansicht aufzurufen, die Funktion auf true zu setzen und ein Attribut der Ansicht von nicht bearbeitbar auf bearbeitbar zu ändern;
**dadurch gekennzeichnet, dass** das Attribut der Ansicht, das als bearbeitbar eingestellt ist, einer Transformation der Ansicht in eine Datenkette oder ein Stück Code entspricht, nachdem das Attribut der Ansicht auf editierbar eingestellt wurde, eine Funktion von setTextAppearance aufgerufen wird, um einen Stil für die Ansicht festzulegen, eine ungerade Anzahl von Malen von Klicks und eine gerade Anzahl von Malen von Klicken jeweils als Start- und Endpositionen markiert sind, basierend auf einer Sequenz von Klickoperationen, die Zeichen zwischen einer ungeraden Anzahl von Malen von Klicks und einer der ungeraden Anzahl von Malen von Klicks benachbarten geraden Anzahl als zu kopierende Zeichen bestimmt sind.

6. Endgerät nach Anspruch 5, wobei die Auslöseoperation des Benutzers Fingerdrücken oder Drücken einer physischen Taste umfasst, um einen Bereich auszuwählen, in dem sich die Ansicht für eine voreingestellte Zeitdauer befindet, oder Auswahl des Bereichs durch Doppelklicken oder Einzelklicken.

7. Endgerät nach Anspruch 5, wobei der Prozessor (31) weiterhin zum Festlegen einer Flaggenvariable der Auslöseoperation Bestimmungsansicht, und Unterscheiden der Ansicht, deren Zeichenkopie ausgeführt werden soll, von anderen Ansichten durch Erkennen der Flaggenvariable vorgesehen ist.

## Revendications

1. Un procédé de copie de caractères de vue, le procédé comprenant :
la réception d'une opération de déclenchement d'un utilisateur en provenance d'une plate-forme d'opérations et
la distinction d'une vue dont la copie de caractères doit être exécutée par rapport à d'autres vues en fonction du fait que l'opération de déclenchement correspond à une zone sur laquelle l'utilisateur (S11) exerce une pression longue ;
l'appel d'une interface de couche de fond de la vue et le réglage d'un attribut de la vue de manière qu'il soit éditable (S12) ; et
la réception d'une opération de clic effectuée sur la vue et l'acquisition d'une position de début et d'une position de fin, et la copie des caractères entre les positions de début et de fin (S13), le collage et la sauvegarde des caractères sur un presse-papier ;
dans lequel l'étape d'appel d'une interface de couche de fond de la vue et de réglage d'un attribut de la vue de manière qu'il soit éditable (S12), comprend :
l'appel d'une fonction de setTextIsSelected d'une interface de couche de fond de la vue et le réglage de la fonction de manière qu'elle soit vraie et qu'un attribut de la vue soit changé d'un état non éditable à un état éditable ;
**caractérisé en ce que** l'état éditable de l'attribut de la vue correspond à une transformation de la vue en une chaîne de données ou un élément de code, après le réglage de l'attribut de la vue de manière qu'il soit éditable, une fonction de setTextAppearance est appelée pour régler un style de la vue, des nombres impairs d'occurrences de clic et des nombres pairs d'occurrences de clic sont indiqués comme positions de début et positions de fin, respectivement, sur la base d'une séquence d'opérations de clic, des caractères entre un nombre impair d'occurrences de clic et un nombre pair adjacent au nombre impair d'occurrences de clic sont déterminés comme étant des caractères à copier.

2. Le procédé selon la revendication 1, dans lequel la copie des caractères entre les positions de début et de fin (S13) comprend :
après chaque nombre pair d'occurrences de clic, le surgissement d'un dialogue pour demander à l'utilisateur si la sélection des caractères est finalisée, et si une copie immédiate doit être effectuée ; et
lors de la réception d'un retour de l'utilisateur confirmant que la sélection des caractères est finalisée et qu'une copie immédiate doit être effectuée, les caractères entre les positions de début et de fin sont copiés.

3. Le procédé selon la revendication 1, dans lequel l'opération de déclenchement de l'utilisateur comprend la pression d'un doigt ou la pression sur un bouton physique pour sélectionner une zone où la vue est située pendant une période de temps préréglée, ou la sélection de la zone par double clic ou simple clic.

4. Le procédé selon la revendication 1, dans lequel la réception de l'opération de déclenchement de l'utilisateur et la distinction de la vue dont la copie de caractères doit être exécutée par rapport à d'autres vues en fonction de l'opération de déclenchement (S11) comprend :
le réglage d'une variable indicateur de la vue déterminée par l'opération de déclenchement, et la distinction de la vue dont la copie de caractères doit être exécutée par rapport à d'autres vues par reconnaissance de la variable indicateur.

5. Un terminal (30) utilisé pour copier des caractères de vue, le terminal comprenant un processeur (31) et un émetteur-récepteur (32) connecté au processeur (31), dans lequel
l'émetteur-récepteur (32) est agencé pour recevoir une opération de déclenchement d'un utilisateur en provenance d'une plate-forme d'opérations ;
le processeur (31) est agencé pour distinguer la vue dont la copie de caractères doit être exécutée par rapport à d'autres vues en fonction du fait que l'opération de déclenchement correspond à une zone sur laquelle l'utilisateur exerce une pression longue et invoquer une interface de couche de fond de la vue pour régler un attribut de la vue de manière qu'il soit éditable ;
l'émetteur-récepteur (32) est en outre agencé pour recevoir une opération de clic qui est effectuée sur la vue pour coller et sauvegarder les caractères sur un presse-papier ; et
le processeur (31) est en outre agencé pour acquérir une position de début et une position de fin en fonction de l'opération de clic et copier les caractères entre les positions de début et de fin ;
dans lequel le processeur (31) est configuré pour appeler une fonction de setTextlsSelected d'une interface de couche de fond de la vue et régler la fonction de manière qu'elle soit vraie et qu'un attribut de la vue soit changé d'un état non éditable à un état éditable ;
**caractérisé en ce que** l'état éditable de l'attribut de la vue correspond à une transformation de la vue en une chaîne de données ou un élément de code, après le réglage de l'attribut de la vue de manière qu'il soit éditable, une fonction de setTextAppearance est appelée pour régler un style de la vue, des nombres impairs d'occurrences de clic et des nombres pairs d'occurrences de clic sont indiqués comme positions de début et positions de fin, respectivement, sur la base d'une séquence d'opérations de clic, des caractères entre un nombre impair d'occurrences de clic et un nombre pair adjacent au nombre impair d'occurrences de clic sont déterminés comme étant des caractères à copier.

6. Le terminal selon la revendication 5, dans lequel l'opération de déclenchement de l'utilisateur comprend la pression d'un doigt ou la pression sur un bouton physique pour sélectionner une zone sur laquelle la vue est située pendant une période de temps préréglée, ou la sélection de la zone par double clic ou simple clic.

7. Le terminal selon la revendication 5, dans lequel le processeur (31) est en outre agencé pour régler une variable indicateur de la vue déterminée par l'opération de déclenchement et distinguer la vue dont la copie de caractères doit être exécutée par rapport à d'autres vues par reconnaissance de la variable indicateur.
